# EUROPÄISCHE PATENTANMELDUNG

(11) **EP 0 590 346 A1**
(43) Veröffentlichungstag der Anmeldung: **06.04.1994**
(21) Anmeldenummer: 93114107.1
(22) Anmeldetag: 02.09.1993
(51) Int. Cl.: H01S 3/03, H01S 3/0975

(54) **Diffusionsgekühlter CO2-Bandleiterlaser mit reduzierter Zündspannung**

(30) Priorität: 30.09.1992 DE 4232843
(71) Anmelder: CARL ZEISS JENA GmbH, D-07745 Jena (DE)
(72) Erfinder: Welsch, Wolfgang, Dr.-Ing., D-85591 Vaterstetten (DE); Krüger, Hans, Dipl.-Phys., D-81737 München (DE); Günther, Wolfgang, Dipl.-Ing., D-81735 München (DE)
(74) Vertreter: Muhsfeldt, Willi

(57) **Zusammenfassung**

Zur Erleichterung der Zündung des Bandleiterlasers ist eine Hilfentladungsstrecke vorgesehen, die entweder durch Segmentierung der HF-Elektrode (2) oder durch mindestens eine längs der Elektrodenfläche (5,6) angeordnete, der Entladungsstrecke benachbarte Hilfselektrode (11,12) gebildet ist.

## Beschreibung

Die Erfindung betrifft einen hochfrequenzangeregten diffusionsgekühlten CO₂-Bandleiterlaser mit einer Masse- und einer HF-Metallelektrode, die jeweils eine im wesentlichen rechteckförmige Elektrodenfläche aufweisen, zwischen denen eine Entladungsstrecke gebildet ist.

Zum Stand der Bandleiterlasertechnik wird auf den Artikel von R. Novack et al., "Diffusionsgekühlte CO₂-Hochleistungslaser in Kompaktbauweise" in "Laser und Optoelektronik", 23 (3)/1991 hingewiesen. Die bekannten Bandleiterlaser sind aus zwei mit Kühlkanälen und mit Mitteln zur gegenseitigen Fixierung versehenen Metallelektroden, zwischen denen ein Entladungsspalt gebildet ist, aufgebaut. Die Elektroden weisen dem Entladungsspalt zugewandte Wellenleiterflächen auf, deren Breite ein Vielfaches ihres Abstandes beträgt. Notwendig sind ferner zwei Resonatorspiegel, die einen instabilen Resonator bilden. Diese Laser lassen sich zwar prinzipiell problemlos zünden, jedoch kann bei einem betriebsneuen bzw. über längere Zeitdauer nicht im Betrieb befindlichen Laser der Zündvorgang mehrere Sekunden in Anspruch nehmen. Eine derart lange Ansprechzeit ist bei einigen Anwendungen jedoch nicht tolerierbar.

Die Aufgabe der Erfindung besteht in der Schaffung eines Lasers der eingangs genannten Art, mit dem ohne großen konstruktiven Aufwand die Laserentladung sicherer und schneller und mit geringerer Zündenergie als bisher gezündet werden kann. Allgemein soll ein verbessertes Ansprechen des Lasers bei Pulsbetrieb gewährleistet werden.

Diese Aufgabe wird erfindungsgemäß dadurch gelöst, daß die HF-Elektrode in mindestens zwei elektrisch getrennte Flächenelemente mit separater HF-Zuführung segmentiert ist, und daß auf einem Teil der Entladungsstrecke zwischen mindestens einem der Flächenelemente und der Masselektrode mindestens eine Hilfsentladung zündbar ist, wobei die Verstärkung im Laser bis zur Zündung einer Hauptentladung auf dem restlichen Teil der Entladungsstrecke unterhalb der Laserschwelle liegt.

Erfindungsgemäß wird die Aufgabe auch dadurch gelöst, daß mindestens an einer Stelle längs der Elektrodenflächen eine zusätzliche Elektrode vorgesehen ist, die zusammen mit der Masseelektrode oder mit einer zweiten zusätzlichen Elektrode eine Hilfsentladungsstrecke bildet, auf der eine HF- oder Gleichspannungs-Hilfsentladung zündbar ist, wobei die Hilfsentladung der Entladungsstrecke benachbart ist und wenigstens ein Teil der in der Hilfsentladung erzeugten Ionen im Bereich der Entladungsstrecke zur Zündung derselben vorhanden sind.

Weiterbildungen der Erfindung sind Gegenstand von Unteransprüchen. Im folgenden wird die Erfindung anhand eines Ausführungsbeispieles und den Figuren der Zeichnung näher erläutert.
Es zeigen:
- Figur 1: schematisch eine erste Ausführungsform eines erfindungsgemäßen Elektrodenpaares,
- Figur 2: eine Schnittdarstellung einer anderen erfindungsgemäßen Ausführungsform mit einer zusätzlichen Hilfsentladungsstrecke.

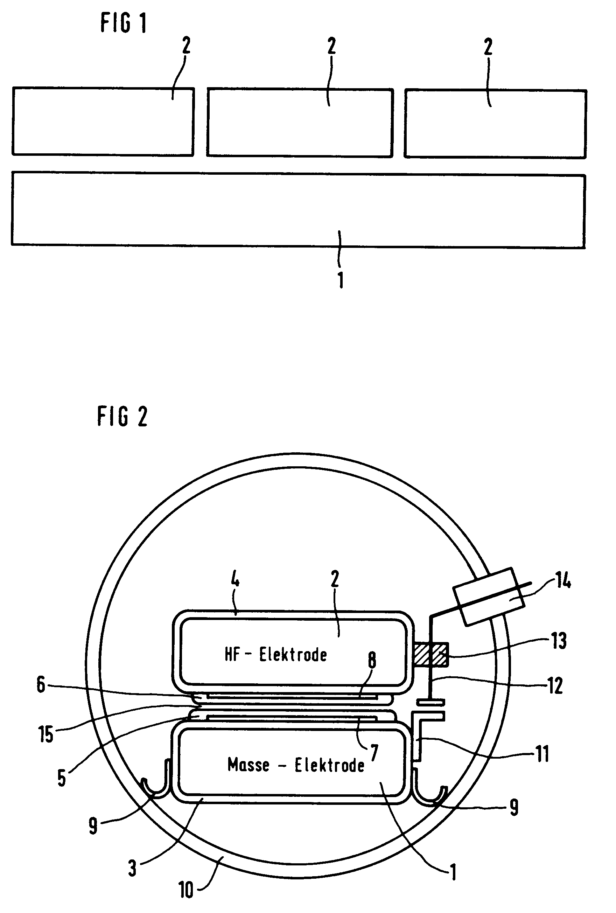

In Figur 1 ist die Masseelektrode 1 und eine in drei Teile segmentierte HF-Elektrode 2 dargestellt. Eines der Flächenelemente 2 kann dauernd mit Hochfrequenzenergie angesteuert werden, so daß eine ständige Gasentladung brennt. Die Fläche dieser Hilfsentladung relativ zur Gesamtfläche bzw. die Flächenverteilung ist so gewählt, daß der Laser noch nicht lasert, da die Verstärkung nicht ausreicht. Durch diese Maßnahmen kann nicht nur die Hauptentladung sicherer und mit niedrigerer Zündenergie gezündet werden, sondern es wird auch die Homogenität der Spannungsverteilung verbessert und es kann außerdem durch Anregung einer geeigneten Elektrodenfläche auch eine feinere Steuerung der Ausgangsleistung des Lasers erzielt werden.

In Figur 2 ist ein Bandleiterlaser dargestellt, bei dem die Masse- und HF-Elektrode jeweils aus einem Trägerteil 3, 4 mit mechanisch stabilem Profil und einer der Entladungsstrecke 15 zugewandten plattenförmigen Elektrodenfläche 5, 6, mit integrierten Kühlkanälen 7, 8, aufgebaut ist. Das Laserinnere ist durch ein Mantelrohr 10 und durch in der Figur nicht dargestellte Stirnplatten vakuumdicht abgeschlossen. Eine bevorzugte Verteilung des Hochfrequenzfeldes kann durch Verbindung der Masseelektrode mit dem Mantelrohr 10 mittels Federn 9 erreicht werden. Etwa parallel zu den Elektrodenflächen 5 und 6 sind zusätzliche Elektroden 11 und 12 dargestellt, die eine Hilfsentladungsstrecke bilden. Dabei kann die Elektrode 11 unmittelbar mit der Masseelektrode 3, 5 verbunden oder sogar durch diese gebildet sein, während die Elektrode 12 durch eine isolierende Halterung 13 fixiert und durch eine am Mantelrohr 10 befindliche HF-Durchführung 14 mit Zündenergie versorgt wird.

Die Hilfsentladung kann mittels HF-Energie oder mittels einer Gleichspannungsquelle angesteuert werden. In der Hilfsentladungsstrecke werden, ebenso wie bei der weiter oben beschriebenen segmentierten HF-Elektrode, Ionen erzeugt, die sich in den Bereich der eigentlichen Entladungsstrecke ausbreiten und dort für eine bessere Zündbarkeit der Hauptentladung sorgen. Es ist vorteilhaft, mehrere gleichmäßig längs der Elektrodenflächen 5, 6 verteilte Hilfsentladungen vorzusehen. Durch Pulsen dieser lokalisierten Hilfsentladungen kann eine verbesserte Ausbreitung der Ionisation entlang der Entladungsstecke erreicht werden. Die Hilfsentladung kann entweder dauernd brennen, oder synchron mit der Hauptentladung gezündet werden. Im Falle einer Erleichterung der Zündung mittels zusätzlicher Elektroden 11 und 12 kann die Zündenergie entweder separat oder über die Zuleitung der Hauptentladungsstrecke zugeführt werden. Die Ausführungsform mit externer Hilfsentladung ist insofern besonders vorteilhaft, als der optische Raum des Bandleiters nicht gestört wird, sowie die Konstruktion der Kühlkanäle nicht geändert werden muß.

Die bisher erforderliche Zündspannung von ca. 500 V kann beim erfindungsgemäßen Bandleiterlaser erheblich in Richtung des Wertes der Brennspannung, deren Wert je nach Elektrodenabstand variiert, reduziert werden. Damit einher geht eine Verringerung der Zündzeit. Die ohne die erfindungsgemäßen Maßnahmen mehr oder weniger variable Zündzeit nimmt durch die Vorionisierung einen praktisch konstanten, kurzen Wert an. Durch die Vorionisierung läßt sich der Laser auch mit kürzeren dutycyclen betreiben, d. h. der Regelbereich der Lichtleistung wird größer.

## Patentansprüche

1. Hochfrequenzangeregter diffusionsgekühlter CO₂-Bandleiterlaser mit einer Masse- und einer HF-Metallelektrode, die jeweils eine im wesentlichen rechteckförmige Elektrodenfläche aufweisen, zwischen denen eine Entladungsstrecke gebildet ist,
**dadurch gekennzeichnet,**
daß die HF-Elektrode (2) in mindestens zwei elektrisch getrennte Flächenelemente mit separater HF-Zuführung segmentiert ist, und daß auf einem Teil der Entladungsstrecke zwischen mindestens einem der Flächenelemente und der Masselektrode mindestens eine Hilfsentladung zündbar ist, wobei die Verstärkung im Laser bis zur Zündung einer Hauptentladung auf dem restlichen Teil der Entladungsstrecke unterhalb der Laserschwelle liegt.

2. Hochfrequenzangeregter diffusionsgekühlter CO₂-Bandleiterlaser mit einer Masse- und einer HF-Metallelektrode, die jeweils eine im wesentlichen rechteckförmige Elektrodenfläche aufweisen, zwischen denen eine Entladungsstrecke gebildet ist,
**dadurch gekennzeichnet,**
daß mindestens an einer Stelle längs der Elektrodenflächen (5, 6) eine zusätzliche Elektrode (12) vorgesehen ist, die zusammen mit der Masseelektrode (3, 5) oder mit einer zweiten zusätzlichen Elektrode (11) eine Hilfsentladungsstrecke bildet, auf der eine HF- oder Gleichspannungs-Hilfsentladung zündbar ist, wobei die Hilfsentladung der Entladungsstrecke benachbart ist und wenigstens ein Teil der in der Hilfsentladung erzeugten Ionen im Bereich der Entladungsstrecke zur Zündung derselben vorhanden sind.

3. Bandleiterlaser nach Anspruch 1 oder 2, bei dem die lokalisierte Hilfsentladung gepulst ist.

4. Bandleiterlaser nach Anspruch 1 bis 3, bei dem die Hilfsentladung dauernd gezündet ist.

5. Bandleiterlaser nach einem der Ansprüche 1 bis 3, bei dem die Hilfsentladung synchron mit der Entladungsstrecke zündbar ist.

6. Bandleiterlaser nach einem der Ansprüche 2 bis 5, bei dem die Zündenergie für die Hilfsentladung entweder separat oder über die Zuleitung zur Entladungsstrecke zuführbar ist.
